# EUROPÄISCHE PATENTANMELDUNG

(11) **EP 2 698 763 A1**
(43) Veröffentlichungstag der Anmeldung: **19.02.2014**
(21) Anmeldenummer: 12005877.1
(22) Anmeldetag: 14.08.2012
(51) Int. Cl.: G06T 7/00, G06T 7/60, A01K 29/00, G01B 11/25

(54) **Verfahren zur Analyse eines lebenden Nutztieres**

(71) Anmelder: Hölscher & Leuschner GmbH & Co., 48488 Emsbüren (DE)
(72) Erfinder: Hölscher, Richard, Dr., 48488 Emsbüren (DE); Hahn, Christoph, 48488 Emsbüren (DE); Morshuis, Klaus, 48531 Nordhorn (DE)
(74) Vertreter: Wischmeyer, André

(57) **Zusammenfassung**

Die Erfindung betrifft ein Verfahren zur Erlangung von für die Vermarktung, das Nutztiermanagement und/oder die Nutztierbehandlung relevanten Informationen zu einem lebenden Nutztier (1), insbesondere zur Gewichts-, Teilstückgewichts- und/oder Magerfleischanteilsbestimmung des Nutztieres, vorzugsweise eines Schweins, umfassend eine Positionierung eines mobilen 3D-Kamerasystems relativ zu dem Nutztier, Aufnehmen eines Abbildes des Nutztieres mittels des 3D-Kamerasystems in Form von 3D-Sensordaten, Anpassen eines 3D-Volumenmodells (5) des Nutztieres an die als dreidimensionale Daten vorliegenden Sensordaten, Analyse der angepassten Modelldaten (des 3D-Volumenmodells) anhand von zuvor ermittelten Referenzwerten zur Ausgabe und/oder Abspeicherung der aus der Analyse erhaltenen Informationen zum analysierten Nutztier sowie Vorrichtung zur Durchführung eines Verfahrens.

## Beschreibung

Die Erfindung betrifft ein Verfahren zur Erlangung von für die Vermarktung, das Nutztiermanagement und/oder die Nutztierbehandlung relevanten Informationen eines lebenden Nutztieres, insbesondere zur Gewichts-, Teilstückgewichts- und/oder Magerfleischanteilsbestimmung des Nutztieres, vorzugsweise eines Schweins.

Im Stand der Technik, z.B. der US 2008/0273760 A1 oder der WO 2009/016183 A1, sind Verfahren bekannt, bei denen die Nutztier-Aufnahmen von 3D-Kamerasystemen zur Bestimmung von tierspezifischen Informationen verwendet werden. Typischerweise wird bei diesen Verfahren zunächst das zu betrachtende Nutztier in eine Schleuse oder einen anderen genau definierten Bereich gebracht. Anschließend wird mittels des 3D-Kamerasystems eine Aufnahme getätigt. Diese Sensordaten werden anschließend analysiert.

Zur Auswertung der Daten werden diese häufig normalisiert und in ausgewählten Bereichen auf bestimmte Oberflächenmerkmale hin untersucht. Hierbei werden die dreidimensionalen Daten anhand vorgegebener Kriterien auf zweidimensionale Daten reduziert, die anschließend auf charakteristische Merkmale hin untersucht werden.

Bei einer Großgruppenhaltung mit mehr als 100 Nutztieren in einem umzäunten Bereich sind die im Stand der Technik bekannten Verfahren nicht ausreichend prozesssicher verwendbar. Einerseits ist es bereits aufwendig, einzelne Tiere aus einer Großgruppe zu isolieren und in die entsprechende Schleusen zu treiben, andererseits hat es sich gezeigt, dass bekannte Verfahren aufgrund der Reduzierung der Datensätze und dem hiermit einhergehenden Verlust von Datenqualität nur mit einem ungünstigen Verhältnis von nötigem Aufwand zu erhaltener Ergebnisqualität betreiben lassen. Nutztier und 3D-Kamera müssen immer in einer genauen Ausrichtung zueinander stehen, die insbesondere in Tierschleusen gegeben ist, um die Datenauswertung zu ermöglichen.

Es ist daher Aufgabe der vorliegenden Erfindung, ein vorbeschriebenes Verfahren für flexiblere Einsatzverhältnisse mit ausreichend hoher Genauigkeit auszubilden.

Die Aufgabe der vorliegenden Erfindung wird gelöst durch ein Verfahren gemäß Anspruch 1, eine Vorrichtung gemäß Anspruch 12 sowie durch den Gegenstand nach Anspruch 16. Vorteilhafte Ausgestaltungen der Erfindung finden sich in den auf diese Ansprüche rückbezogenen Ansprüchen sowie der nachfolgenden Beschreibung.

Erfindungsgemäß ist vorgesehen, bei einem Verfahren zur Erlangung von für die Vermarktung, das Nutztiermanagement und/oder die Nutztierbehandlung relevanten Informationen zu einem lebenden Nutztier, insbesondere zur Gewichts-, Teilstückgewichts- und/oder Magerfleischanteilsbestimmung des Nutztieres, vorzugsweise eines Schweins, ein mobiles 3D-Kamerasystem relativ zu dem Nutztier zu positionieren, ein Abbild des Nutztieres mittels des 3D-Kamerasystems in Form von 3D-Sensordaten zu erzeugen, ein insbesondere in einem zugehörigen EDV-Mittel hinterlegtes 3D-Volumenmodell des Nutztieres vorzugsweise automatisiert mittels eines Computerprogramms an die als dreidimensionale Daten vorliegenden Sensordaten anzupassen, die angepassten Modelldaten des 3D-Volumenmodells insbesondere anhand von zuvor ermittelten Referenzwerten hinsichtlich der zu erlangenden Informationen zu analysieren und zur Ausgabe und/oder Abspeicherung der aus der Analyse erhaltenen Informationen zum analysierten Nutztier zu verwenden. Erstmalig ist es möglich, unabhängig von der Positionierung der Kamera zum Nutztier eine Auswertung der aufgenommenen Daten durchzuführen. Der Anwender kann somit unabhängig von räumlichen Begebenheiten und/oder hinzuzuziehenden Sachverständigen seine Nutztiere analysieren.

In Abgrenzung zum Stand der Technik wird somit einerseits ein mobiles 3D-Kamerasystem verwendet. Hiermit einher gehen ungenaue Randbedingungen. Es hat sich als vorteilhaft erwiesen, insbesondere um die variablen Randbedingungen der Sensordaten zu eliminieren, ein 3D-Volumen- oder Körpermodell des Nutztieres vorzugsweise vorab zu definieren und dieses dann an die aufgenommenen, dreidimensionalen Sensordaten anzupassen. Der Verlust an Daten aufgrund einer Datenreduktion wird hierbei weitgehend gering gehalten. Durch die Verwendung von echten Tiefeninformationen, die nicht auf 2D-Konturen reduziert werden, sind die aus dem angepassten 3D-Volumenmodell gewonnenen Daten signifikant besser als die aus herkömmlichen Verfahren gewonnenen. Gleichzeitig kann das mobile, insbesondere für eine Bedienperson tragbare 3D-Kamerasystem direkt zu dem Nutztier gebracht werden, welches dann in der Regel ohne unter Stress zu geraten vermessen wird.

Vorzugsweise wird bei dem erfindungsgemäßen Verfahren zur Positionierung ein zumindest teilweise per Hand trag- und bedienbares 3D-Kamerasystem auf das lebende Nutztier ausgerichtet und eine Bildaufnahme durch manuelle Betätigung des 3D-Kamerasystems oder automatisiert aufgrund gleichzeitig erfasster Bildwerte getätigt. Per Hand ist somit insbesondere der Kamera- und ggf. Anzeigeteil des Systems tragbar. Das manuell bedienbare 3D-Kamerasystem, welches zur Bildauswertung mit EDV-Mitteln versehen oder mit diesen beispielsweise drahtlos verbunden sein kann, kann gezielt auf bereits vom Benutzer vorselektierte Nutztiere ausgerichtet werden. Ein manuell tragbares 3D-Kamerasystem ist hierbei eines, dessen mit der Hand zu haltender Sensor- und Aufnahmeteil ein Gewicht von weniger als 3 kg aufweist. Weitere EDV- oder Computermittel, insbesondere zur Speicherung und Auswertung können bereits in den Kamera- und Sensorteil integriert, per Kabel oder drahtlos angebunden sein und z.B. separat in einem zugehörigen Rucksack oder dergleichen mitgetragen werden. Nachdem der Nutzer das 3D-Kamerasystem auf das Nutztier ausgerichtet hat, kann er einen Auslöser betätigen, so dass eine oder mehrere kurz nacheinander folgende Aufnahmen erzeugt werden. Alternativ kann das 3D-Kamerasystem bei einer Auswertung eines Live-Bildes des Kamerasensors anhand vorab selektierter Strukturen automatisiert eine Abbildung erzeugen. Hierbei können beispielweise auf einfache Weise erkennbare Konturen aufgrund von scharfen Gradienten in der Höheninformation erkannt werden und mit vorab definierten Konturen verglichen werden.

Besonders bevorzugt wird die Aufnahme durch ein Signal eines Betätigungselementes, welches vorzugsweise an einem Griff positioniert und mit einem Finger betätigbar ist, ausgelöst. Das 3D-Kamerasystem kann somit einen ergonomisch geformten Handgriff aufweisen, dem ein Abzug zugeordnet ist, ähnlich wie dies bei Pistolen oder Werkzeugen der Fall ist.

Vorzugsweise ist das 3D-Kamerasystem mit einer Zielvorrichtung versehen, die eine Markierung beispielsweise auf dem Nutztier oder dem auf einem Anzeigemittel erscheinenden Nutztier erzeugt, und die zumindest einen Teilbereich des vom 3D-Kamerasystem erfassbaren Bildbereiches kennzeichnet. Bei einem erfassten Ziel kann dann eine Aufnahme manuell ausgelöst werden. Alternativ kann dies wie vorbeschrieben auch automatisiert erfolgen. Beispielsweise können erkannte Umrisse eines Tieres in dem Messfeld als farbig markierte Umrandung hervorgehoben werden, so dass bereits erste Auswerteergebnisse anhand von Livebildern zur Verbesserung der Aufnahmequalität verwendet werden.

Vorzugsweise erfolgt die Anpassung des 3D-Volumen- oder Körpermodells an die Sensordaten durch die Anpassung einer Freiformfläche, die durch eine Vielzahl von Punkten definiert wird, an die aufgenommen Daten. Die Anpassung der Freiformfläche zur Anpassung des Volumen- oder Körpermodells des Nutztieres kann zur Erhöhung der Ergebnisqualität vorzugsweise anhand von mehr als einem innerhalb eines frei programmier- oder vorgebbaren oder auch festen Zeitfensters von beispielsweise 1 Min. aufgenommenes Abbildes des Nutztieres erfolgen. Entsprechend können die Ergebnisse schneller verifiziert werden, was bei sich innerhalb einer vorgegebenen Fläche frei bewegenden Nutztieren, die komplett andere Körperhaltungen aufweisen können, zu einer Verbesserung des Ergebnisses führt.

Das 3D-Volumenmodell weist vorzugsweise mehr als 24, besonderes bevorzugt 48 oder mehr in einem dreidimensionalen Raum definierte Modellpunkte auf, die zum Anpassen an die gewonnenen Sensordaten verwendet werden. Durch die sich hieraus ergebende Anzahl von Variablen kann ein idealisierter Nutztierkörper ausreichend genau beschrieben werden.

In einer Ausführungsform des erfindungsgemäßen Verfahrens handelt es sich bei dem 3D-Volumenmodell um eine reduzierte und daher idealisierte Körperform des Nutztieres, bei der die die Ergebnisse nicht weiter verbessernde Teile bzw. Körperpartien des Nutztieres weglassen werden. Hierbei kann es sich insbesondere um ein 3D-volumenmodell handeln, welches unter Verzicht auf zumindest Teile des Kopfes, der Beine und/oder eines Schwanzes abbildende Körperbereiche ausgebildet ist. Diese Bereiche haben insbesondere für die Bildung des Body Condition Scores keine ausreichende Aussagekraft.

Vorzugsweise wird in Anbetracht der äußerst variablen Umgebungszustände bei einer Großgruppenhaltung erfindungsgemäß aus den aufgenommenen Sensordaten zunächst der am nächsten an der Kamera befindliche Messwert ermittelt. Als weiterer Verfahrensschritt kann analysiert werden, ob es sich bei dem zunächst ermittelten minimalen Abstandswert um einen Fehlerwert handelt. Ein solcher kann sich z.B. aus ausgefallenen Sensoren oder aufgrund von mit Partikeln stark verschmutzter Luft ergeben. Fehlerwerte werden z.B. anhand der Umgebungsgradienten ermittelt und können dann aus der Auswertung ausgeschlossen werden.

Nach der Ermittlung des nächsten Wertes werden die dreidimensionalen Daten gefiltert, wobei ein "Abstandsfilter" für die Auswertung nur die innerhalb eines bestimmten Bereiches von der Kamera angeordneten Daten verwendet. Über die Analyse der Tiefen- bzw. Abstandsinformation zur Kamera können somit Bereiche der Daten vordefiniert werden, die die relevanten Daten zum Anpassen einer Körperfreiformfläche ergeben. Von der Kamera aus betrachtet hinter dem gewählten Abstandsbereich liegende Daten, die nicht Teil des betrachteten Nutztieres darstellen, können nur zu einer Verschlechterung des Ergebnisses führen und werden nicht weiter verwendet.

Vorteilhafterweise werden die Sensordaten zur Reduzierung von Ungenauigkeiten vor der Auswertung zusätzlich gefiltert, wobei diese Filterung anhand von Intensitäts- oder weiteren Abstandsinformationen erfolgen kann. Hierdurch kann das Rauschen der Daten unterdrückt werden und es können insbesondere einzelne Ausfälle beispielsweise aufgrund von fehlerhaften Sensoren, Spiegelungen auf der Nutztieroberfläche aufgrund Feuchtigkeit od.dgl., die ebenfalls nicht zu einer Verbesserung der Datenlage führen, herausgenommen werden. Bevorzugt werden Filterungen aufgrund von Abstandsinformationen mittels Auswertung der Gradienten dazu genutzt, ein einzelnes Nutztier bei einer Mehrzahl aufgenommener Nutztiere zu extrahieren und die übrigen Nutztiere betreffende Daten zu eliminieren.

Das 3D-Volumenmodel wird vorzugsweise durch insbesondere als Nurbs ausgebildete B-Splines, T-Splines und/oder Bezierflächen gebildet. Die hierfür verwendbaren Algorithmen sind hinlänglich bekannt und ausreichend schnell, um unmittelbar nach der Messung, d.h. vorzugsweise innerhalb von höchstens 30 Sekunden ein Ergebnis bezüglich beispielsweise des Gewichtes und/oder eines BCS-Wertes zu erhalten.

Nach einer Analyse der aufgenommenen Sensordaten ist es von Vorteil, wenn ein Anzeigemittel des 3D-Kamerasystems den Erfolg oder Misserfolg einer Messung bzw. einer Bestimmung der gewünschten Informationen beispielsweise in Form von Zahlenwerten oder farbigen Markierungen anzeigt. Hierbei können auch im Rahmen der Analyse ausgewertete Fehlertoleranzen od.dgl. mit angegeben werden, so dass eine bedienende Person entscheiden kann, ob ein weiterer Analysevorgang gestartet werden soll. Vorzugsweise handelt es sich bei dem Anzeigemittel um ein Display oder um Leuchtmittel. Mittels des oder der der Kamera und/oder der zugehörigen EDV-Einheit zugehörigen Anzeigemittel kann auch die Erfüllung eines vordefinierten oder vordefinierbaren Selektionskriteriums angezeigt werden. Hierbei kann es sich vorzugsweise um Bandbreiten von Gewichten, Teilstückgewichten und/oder Magerfleischanteilen handeln. Das Selektionskriterium kann hierbei vom System in Abhängigkeit von im Wege einer Deckungsbeitragsanalyse erlangten Informationen, brei der Futter- und Stallplatzkosten sowie aktuelle Marktpreise verwendet werden können, automatisiert gewählt werden.

Neben den vor- oder nachbeschriebenen Informationen betreffend Gewicht, Teilstückgewichten oder Magerfleischanteilen kann das erfindungsgemäße Verfahren bzw. ein zugehöriges 3D-Kamerasystems auch zur Bestimmung von BCS-Werten ("Body Condition Score"-Werten) des aufgenommenen Nutztieres verwendet werden.

In einer weiteren vorteilhaften Ausbildung kann das Kamerasystem in Quasi - Echtzeit den Erfolg oder Misserfolg einer Messung anzeigen und hierbei beispielsweise bis zu 30 Aufnahmen pro Sekunde tätigen, die dann in einer Datenauswertung zumindest teilweise verwendet werden. Quasi-Echtzeit meint hier eine Anzeige eines Ergebnisses innerhalb einer Zeitspannung von 30, vorzugsweise innerhalb von 10 Sekunden nach der letzten für die Auswertung verwendeten Messung des Nutztieres. Während im Stand der Technik eine entsprechend langsame Anpassung bzw. Normalisierung der Vielzahl der aufgenommenen Daten auf eine bestimmte Ausrichtung erfolgt, kann erfindungsgemäß aufgrund der Anpassung einer Freiformfläche an die Daten eine hohe Geschwindigkeit in der Auswertung erzielt werden.

Neben den reinen Tiefeninformationen kann die Verwendung von Sensordaten mit Farb- und/oder Infrarrotinformationen zu einer verbesserten Bestimmung der Ergebnisse sowie zur Auswertung weiterer Details verwendet werden. Farb- und Infrarotmessungen zur Temperaturbestimmung können in der Anpassung des 3D-Volumenmodells an die aufgenommenen Daten verwendet werden. Anhand dieser zusätzlichen Daten lassen sich automatisiert beispielsweise Tiergruppen mit gleichen Typmerkmalen oder z.B. kranke Tiere identifizieren. Auch eine Einzeltieridentifikation ist verbessert möglich.

Über die Verwendung einer Datenbank und den Vergleich mit vorherigen Präferenzwerten können zeitliche Kriterien mit in die Auswertung einfließen. Beispielsweise können hierbei Bewegungsabläufe simuliert werden, es können Gewichtszunahmen und andere Körperkonditionen ermittelt werden. Die Erfassung und die Veränderung dieser Werte über die Zeit dient beispielsweise der Anpassung der Nahrungszusammensetzung oder -menge oder zur Bestimmung der züchterischen Leistungsfähigkeit, krankhafter Veränderungen oder anderer körperlicher Leistungsparameter der betrachteten Nutztiere. Diese Ergebnisse können von dem mobilen 3D-Kamerasystem ausgegeben und/oder abgespeichert werden. Das mobile 3D-Kamerasystem kann auch über eine für den Datenaustausch zu verwendende Schnittstelle beispielsweise drahtlos in ein Nutztiermanagementsystem eingebunden sein, in dem dann computergestützt eine solche Auswertung vorgenommen wird.

Eine zugehörige Auswertesoftware, die in einem EDV-Mittel, welches dem mobilen Kamerasystem zugeordnet ist und drahtlos, stationär oder auch direkt unmittelbar tragbar mit der Kamera verbunden ist, kann insbesondere Auswertungen hinsichtlich von Körpergewichten, Teilstückgewichten (Lachs, Bauch, Schulter, Schinken), Fettansatz und deren zeitliche Veränderungen über den Abgleich mit bereits gespeicherten Informationen ausgeben. Auch ist es möglich, anhand der Anpassung des Volumenmodells an die 3D-(Sensor-) Daten bestimmte geschlechtsspezifische Charakteristika (z.B. Körperbau) oder das Geschlecht des Nutztieres zu identifizieren.

In einer weiteren erfindungsgemäßen Ausbildung des Verfahrens wird die angepasste Freiformfläche hinsichtlich ihrer geschlechtsspezifischen, typspezifischen oder individuellen Ausbildung analysiert. In der individuellen Analyse wird das Nutztier lediglich erkannt, ohne es mit anderen Tieren zu vergleichen. Bei einer Vielzahl betrachteter Tiere kann über das erfindungsgemäße Verfahren weiterhin eine Clusterung einer Gruppe von Nutztieren beispielsweise eines Schweinemaststalles vorgenommen werden, bei der Schweine oder Nutztiere mit ähnlichen Leistungsmerkmalen zusammengefasst werden.

Die erfindungsgemäß gewonnenen Daten können weiterhin in einem Nutztiermanagementsystem verwendet werden, in dem neben dem 3D-Kamerasystem zumindest ein Fütterungscomputer und/oder Stallschleusen bzw. -gatterbedienvorrichtungen vorhanden sind, wobei die Daten aus dem auch nachfolgend noch beschriebenen 3D-Kamerasystem in das Nutztiermanagementsystem über eine zughörige Schnittstelle überführt und dort computergestützt weiterverarbeitet werden. So kann den analysierten Tieren vom Nutztiermanagementsystem eine speziell abgestimmte Futtermischung in Abhängigkeit der errechneten Informationen dargereicht werden sowie ein oder mehrere Tiere können nach der Aufnahme und Analyse der gewünschten Informationen im erfindungsgemäßen Verfahren durch Schaltung eines Weges durch den Stall einem Fütter- oder Vermarktungsbereich zugeführt werden.

Die in das Herdenmanagementsystem eingespeisten Informationen können in einer zeitlichen Analyse zur Bestimmung der züchterischen Leistungsfähigkeit, krankhafter Veränderungen oder anderer körperlicher Leistungsparameter eines individuellen Nutztieres oder einer Gruppe von Nutztieren verwendet werden, um insbesondere automatisiert Handlungsempfehlungen vorzugsweise hinsichtlich Vermarktung, Fütterung, Stallhaltung und/oder Medikamentation der(s) Nutztiere(s) abzuleiten und auszugeben.

Das 3D-Kamerasystems kann mittels einer Rasterbeleuchtung, einer Laserabtastung, mittels Stereokameratechnik oder anderer bekannter Verfahren realisiert werden. Vorzugsweise ist das Kamerasystem mit einem Infrarotlaser-Projektor und einem CMOS-Sensor versehen, wobei insbesondere eine 640 x 480 Pixel Ortsauflösung und eine Tiefenauflösung von zumindest 10 Bit ausreichend ist für eine genaue Bestimmung der gewünschten Werte. Ein typischerweise abzudeckendes Messvolumen liegt hierbei in einem Bereich zwischen 1 m und 5 m Abstand zur Kamera. Eine entsprechend ausgebildete Kamera weist zumindest 2000 Quantisierungsstufen auf. Entsprechend wird das 3D-Volumenmodell in den zugehörigen Parameterraum gefittet.

Ein dreidimensionales und insbesondere standardisiertes Volumen- bzw. Körpermodell des Nutztieres ist im Vorfeld beispielsweise über die Auswertung einer Vielzahl von Daten zu bilden und im System zu hinterlegen. In der Datenauswertung des erfindungsgemäßen Verfahrens wird dann die Bestimmung der Lage des vermessenen Tierkörpers im Raum relativ zu der Kamera vorgenommen. Diese Auswertung erfolgt EDV-gestützt und vorzugsweise automatisch. Dann erfolgt ebenfalls automatisch und EDV-gestützt die Angleichung des (Standard-) Volumenmodells. Aus der Anpassung dieses Körpermodells an das gemessene Nutztier können dann die gewünschten Daten, z.B. Gewichts- oder Volumendaten ermittelt werden.

Eine besonders einfache Bedienung wird durch ein Kamerasystem ermöglicht, welches eine Zielvorrichtung zur Erzeugung einer Markierung vorzugsweise auf dem Rücken und/oder einer Flanke des Nutztieres aufweist. Hierbei kann das Messfeld dann beispielsweise ein Muster auf dem Nutztier, beispielsweise auf dem Rücken des Schweines erzeugen, so dass eine Aufnahme gezielter erfolgen kann.

Weitere Vorteile und Einzelheiten der Erfindung sind in der nachfolgenden Figurenbeschreibung niedergelegt. In den schematischen Abbildungen zeigt:
- Fig. 1: eine Aufnahme eines erfindungsgemäßen Kamerasystems
- Fig. 2: den Gegenstand nach Fig. 1 in einer weiteren Ansicht,
- Fig. 3: eine Darstellung eines Volumen-/Körpermodells,
- Fig. 4: eine weitere Darstellung eines Volumen-/Körpermodells,
- Fig. 5: eine Abbildung einer erfindungsgemäßen Messvorrichtung.

Gleich oder ähnlich wirkende Teile sind - sofern dienlich - mit identischen Bezugsziffern versehen. Einzelne technische Merkmale der nachfolgend beschriebenen Ausführungsbeispiele können auch mit den Merkmalen der vorbeschriebenen Ausführungsbeispiele zu erfindungsgemäßen Weiterbildungen führen.

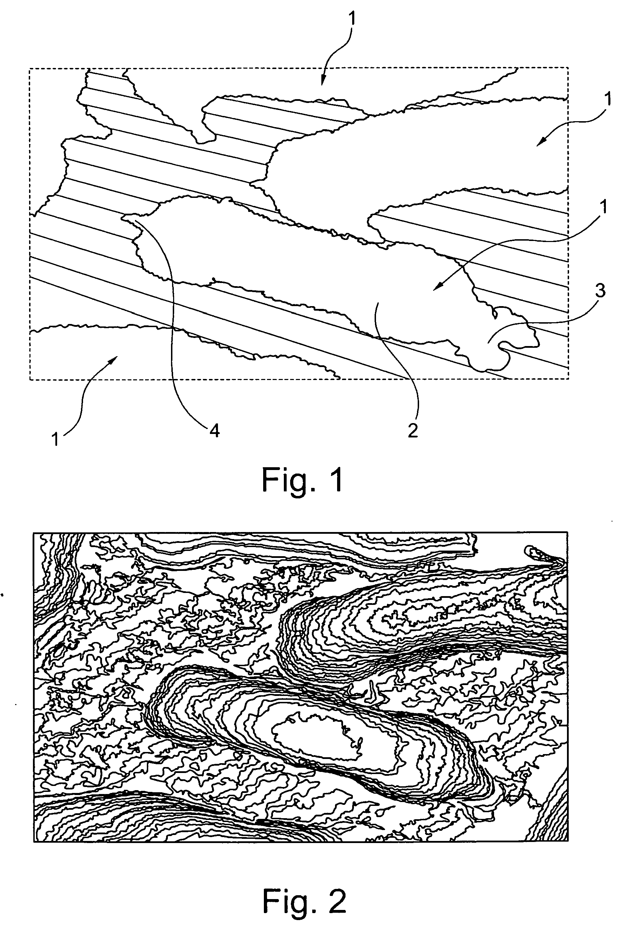

In der Fig. 1 zeigt die Aufnahme eines erfindungsgemäßen Kamerasystems das Abbild einer Vielzahl von Nutztieren 1, bei denen es sich in diesem Fall um in einer Gruppe gehaltene Schweine handelt. Gegenstand der Auswertung soll ein zentral in der Figur angeordneter Körper 2 sein. Ein Kopfbereich 3 sowie ein Schwanzbereich 4 werden für die Auswertung nicht relevant sein. Bei der Aufnahme kann es sich um eine quasi Live-Bild handeln, welches zwecks automatischer Auslösung einer vollständigen Auswertung vorab ausgewertet werden kann. Fig. 2 zeigt das von der Kamera aufgenommene Abbild der Fig. 1 in einer mit zusätzlichen Daten versehenen Darstellung.

In einer solchen ersten Ansicht der geometrischen Daten sind die nicht weiter zu bearbeitenden Bereiche noch zu erkennen. Mittels einer zugehörigen Software kann das System erkennen, ob ausreichend 3D-Daten über ein auszuwertendes Nutztier vorhanden sind (Fig.2). Hierbei wird beispielsweise überprüft, ob ausreichend geschlossene Höhenkonturen vorhanden sind. Alternativ kann die Auswertung auch aufgrund eines gezielt erzeugten Abbildes durch Betätigung eines Auslösers gestartet werden. Zur Auswertung der geometrischen Daten in der Aufnahme werden zunächst die den Spaltenboden repräsentierenden Teile des Untergrundes herausgefiltert. Dies erfolgt über einen Abstandsfilter, der zunächst den dichtesten zentralen Punkt zur Kamera ermittelt, der innerhalb eines geschlossenen Höhenlinienbereichs vorhanden ist. Anschließend werden die innerhalb eines vorgebbaren Bereiches befindlichen Daten, beispielsweise die maximal 80 cm weiter entfernt liegenden Raumdaten für die weitere Bearbeitung ausgewählt.

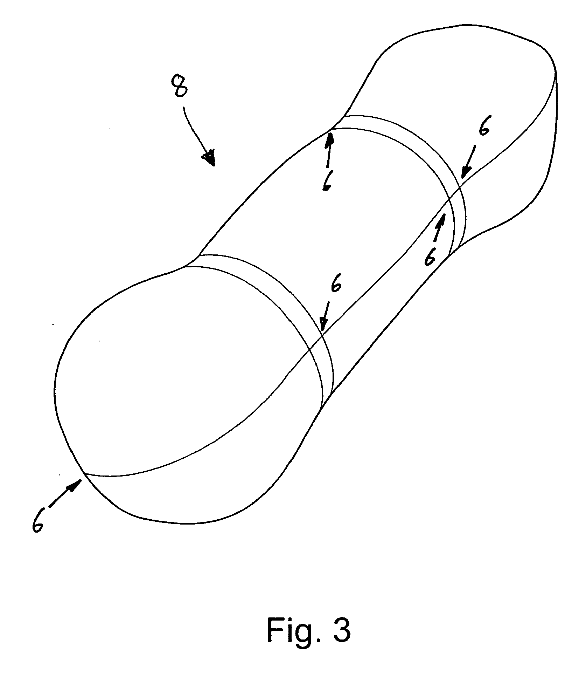

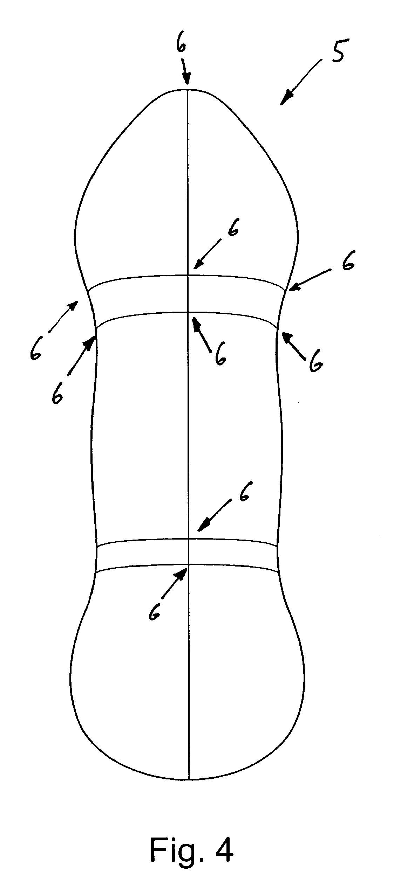

Anschließend wird ein Standardkörpermodell 5, welches in Fig. 4 gezeigt ist an die Daten der Fig. 2 angepasst. Hierzu wird das Körpermodell wie beispielsweise in der Fig. 3 dargestellt, gedreht und/oder um eine Achse gekippt und in den Abmessungen angepasst. So ergibt sich eine angepasste Freiformfläche (8) bzw. ein angepassten Körpermodell. Darüber hinaus können in Abhängigkeit der anzupassenden Freiformflächen die einzelnen Bereiche des idealisierten Tieres angepasst werden. In den Abbildungen der Fig. 3 und 4 sind nur wenige der im vorliegenden Fall 50 anzupassenden Definitionspunkte 6 des Volumenkörpermodells kenntlich gemacht.

Nach der Anpassung wird der entwickelte Volumenkörper anhand von Referenzwerten, die beispielsweise aus einer Datenbank stammen, ausgewertet. Hierzu können insbesondere die Koordinaten der Definitionspunkte des Volumenkörpermodells mit Referenzwerten aus einer Datenbank abgeglichen werden.

Ausgehend von den gewünschten Werten, insbesondere des Gewichtes, eines Teilstückgewichts, des Fettanteils, des Geschlechts, des Body Condition Scores, des Gesundheitszustands, der Daten über Bewegungsabläufe, der Gattung oder eines Gattungstyps des Nutztieres können Handlungsempfehlungen wie beispielsweise eine angepasste Fütterung ausgegeben werden. Auch diese Empfehlungen ergeben sich aufgrund einer Datenbank mit Referenzwerten, die über einen Nutztierbestand von zumindest 500, bevorzugt 1000 Tieren, gebildet worden ist. Auch aus dem Vergleich von zu unterschiedlichen Zeiten aufgenommenen Daten können sich bei Aufnahme und Auswertung eines neuen Datensatzes Handlungsempfehlungen aus dem System erzeugen lassen.

Sobald eine Messung vorgenommen wurde und ein Ergebnis gefunden und/oder angegeben wurde, kann dieses Ergebnis auch in die Datenbank mit einfließen, ggf. unter der Voraussetzung einer Freigabe durch eine Bedienperson.

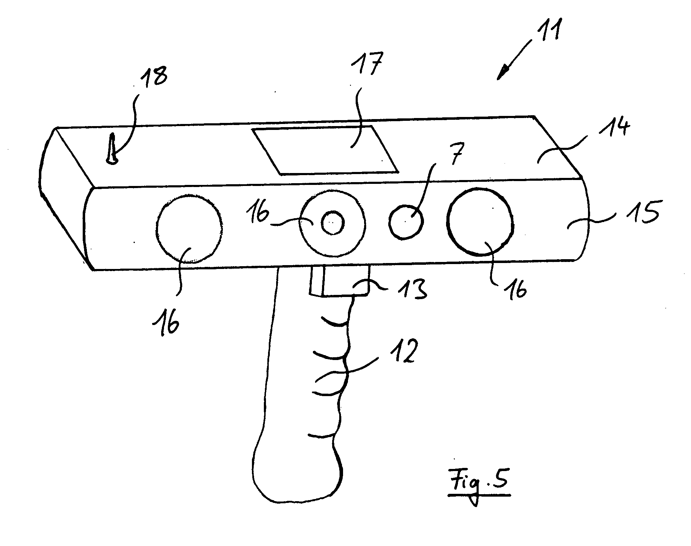

In der Fig. 5 ist ein Teil eines erfindungsgemäßen Kamerasystems zu erkennen. Gezeigt ist eine mobile, mit einer Hand zu tragende und haltende 3D-Kamera 11. Diese umfasst einen ergonomisch geformten Handgriff 12 mit einem mit einem Finger betätigbaren und als Taste ausgebildeten Betätigungselement 13. Oberhalb des Handgriffs befindet sich das eigentliche Kameragehäuse 14. In dessen Frontseite 15 sind mehrere Öffnungen eingelassen, in die die für die 3D-Abbildung notwendigen Elemente bzw. Sensoren 16 des Kamerasystems eingearbeitet sind. Hierbei handelt es sich um eine Kombination aus einem Infrarot-Laserprojektor und einem C-MOS-Sensor zur Aufnahme von Infrarot-Laser-Punkten. Darüber hinaus ist eine Farbkamera vorhanden. Beide Sensoren arbeiten mit einer Bildwiederholrate von 30 hz. Eine Laserzielvorrichtung 7 dient der Markierung des anvisierten Nutztieres, wobei gleichzeitig von der Zielvorrichtung ein Bereich der Bilddaten gekennzeichnet wird. Auf einem Anzeigemittel 17 können Betriebszustandsinformationen für die Kamera wie beispielsweise Batterieladung, Netzwerkverbindung oder auch idealisierte Darstellungen der Sensoren dargestellt werden. Insbesondere kann hier-dargestellt werden, ob eine Messung erfolgreich gewesen ist bzw. zu einem statistisch signifikanten Ergebnis geführt hat und ob die errechneten bzw. bestimmten Informationen innerhalb eines gewählten Selektionskriteriums liegen. Eine Antenne 18 dient der W-Lan-Anbindung an weitere EDV-Mittel, die eine Rechnereinheit zur Auswertung der Daten unter gegebenenfalls eine Datenbankanbindung und eine Schnittstelle an ein Nutztiermanagementsystem umfassen können.

## Patentansprüche

1. Verfahren zur Erlangung von für die Vermarktung, das Nutztiermanagement und/oder die Nutztierbehandlung relevanten Informationen zu einem lebenden Nutztier (1), insbesondere zur Gewichts-, Teilstückgewichts- und/oder Magerfleischanteilsbestimmung des Nutztieres, vorzugsweise eines Schweins, umfassend eine Positionierung eines mobilen 3D-Kamerasystems relativ zu dem Nutztier, Aufnehmen eines Abbildes des Nutztieres mittels des 3D-Kamerasystems in Form von 3D-Sensordaten, Anpassen eines 3D-Volumenmodells (5) des Nutztieres an die als dreidimensionale Daten vorliegenden Sensordaten, Analyse der angepassten Modelldaten (des 3D-Volumenmodells) anhand von zuvor ermittelten Referenzwerten zur Ausgabe und/oder Abspeicherung der aus der Analyse erhaltenen Informationen zum analysierten Nutztier.

2. Verfahren nach Anspruch 1, wobei zur Positionierung das per Hand trag- und bedienbare 3D-Kamerasystem auf das lebende Nutztier ausgerichtet wird und eine Bildaufnahme durch manuelle Betätigung des 3D-Kamerasystems oder automatisiert aufgrund insbesondere gleichzeitig erfasster Bildwerte getätigt wird.

3. Verfahren nach Anspruch 2, **dadurch gekennzeichnet, dass** die Aufnahme durch ein Signal eines Betätigungselements (13), welches mit einem Finger betätigbar ist, ausgelöst wird.

4. Verfahren nach einem der vorherigen Ansprüche, **dadurch gekennzeichnet, dass** die Anpassung des 3D-Volumenmodells (5) an die Sensordaten über die Anpassung einer Freiformfläche mit einer Vielzahl von Punkten (6) an die gemessenen Daten erfolgt, wobei insbesondere mehr als ein vorzugsweise innerhalb eines vorgegebenen, vorgebbaren und/oder frei programmierbaren Zeitfensters von beispielsweise 1 min aufgenommenes Abbild des Nutztieres in der Anpassung verwendet werden kann.

5. Verfahren nach Anspruch 4, **dadurch gekennzeichnet, dass** mehr als 24 in einem dreidimensionalen Raum definierte Modellpunkte für das 3D-Volumenmodell verwendet werden.

6. Verfahren nach Anspruch 4 oder 5, **dadurch gekennzeichnet, dass** das 3D-Volumenmodell (6) eine reduzierte Körperform des Nutztieres darstellt, wobei das 3D-Volumenmodell vorzugsweise unter Verzicht auf zumindest Teiles des Kopfes, der Beine und/oder eines Schwanzes abbildende Körperbereiche (3,4) gebildet ist.

7. Verfahren nach einem der vorherigen Ansprüche, **dadurch gekennzeichnet, dass** aus den aufgenommenen Sensordaten der am nächsten an der Kamera befindliche Messwert ermittelt wird und/oder ein Abstandsbereich von Sensordaten aus diesen herausgefiltert werden, wobei die Sensordaten zusätzlich zur Reduzierung von Ungenauigkeiten gefiltert werden können, und diese zusätzliche Filterung anhand von Intensitäts- oder Abstandsinformationen erfolgt.

8. Verfahren nach einem der vorherigen Ansprüche, **dadurch gekennzeichnet, dass** das 3D-Volumenmodell (5) anhand von insbesondere als Nurbs ausgebildeten B-Splines, T-Splines, und/oder Bezierflächen gebildet ist.

9. Verfahren nach einem der vorherigen Ansprüche, **dadurch gekennzeichnet, dass** das 3D-Kamerasystem mittels einer Zielvorrichtung (7) eine Markierung erzeugt, die zumindest einen Teilbereich des vom 3D-Kamerasystem erfassbaren Bildbereiches kennzeichnet.

10. Verfahren nach einem der vorherigen Ansprüche, **dadurch gekennzeichnet, dass** nach einer durchgeführten Analyse der aufgenommenen Sensordaten ein Anzeigemittel (17) des 3D-Kamerasystems den Erfolg oder Misserfolg der Bestimmung und/oder die Erfüllung eines vordefinierbaren oder vordefinierten Selektionskriteriums anzeigt, wobei diese Anzeige des 3D-Kameralsystems in quasi-Echtzeit erfolgt.

11. Verfahren nach Anspruch 10, **dadurch gekennzeichnet, dass** die Sensordaten neben den Tiefeninformationen ebenfalls Farb- und/oder Infrarotinformationen umfassen, die in der Analyse verwertet werden.

12. Verfahren nach einem der vorherigen Ansprüche, **dadurch gekennzeichnet, dass** die angepasste Freiformfläche (8) hinsichtlich ihrer geschlechtsspezifischen, typspezifischen oder individuellen Ausbildung analysiert wird.

13. Vorrichtung zur Durchführung eines Verfahren nach einem der vorherigen Ansprüche, **dadurch gekennzeichnet, dass** das mobile 3D-Kamerasystem mit einem Handgriff (12) versehen ist.

14. Vorrichtung nach Anspruch 13, **dadurch gekennzeichnet, dass** das Kamerasystem einen Infrarot-Laser-Projektor und CMOS-Sensor aufweist, wobei das Kamerasystem insbesondere eine 640 × 480 Pixel Ortsauflösung und eine Tiefenauflösung von zumindest 10-bit umfasst.

15. Vorrichtung nach Anspruch 13 oder 14, **dadurch gekennzeichnet, dass** das Kamerasystem eine Zielvorrichtung (7) zur Erzeugung einer Markierung vorzugsweise auf dem Rücken und/oder einer Flanke des Nutztieres (1) aufweist.

16. Verwendung von nach einem Verfahren nach einem der Ansprüche 1 bis 12 gewonnenen Informationen in einem Nutztiermanagementsystem umfassend eine Vorrichtung nach einem der Ansprüche 13 bis 15 sowie einen Fütterungscomputer und/oder Stallschleusen oder -gatterbedienvorrichtungen, wobei die Daten aus dem 3D-Kamerasystem in das Nutztiermanagementsystem über eine zughörige Schnittstelle überführt und dort computergestützt weiterverarbeitet werden.

17. Verwendung nach Anspruch 16, **dadurch gekennzeichnet, dass** die Informationen in dem Nutztiermanagementsystem in einer zeitlichen Analyse zur Bestimmung der züchterischen Leistungsfähigkeit, krankhafter Veränderungen oder anderer körperlicher Leistungsparameter eines individuellen Nutztieres (1) oder einer Gruppe von Nutztieren (1) verwendet werden, um insbesondere automatisiert Handlungsempfehlungen vorzugsweise hinsichtlich Vermarktung, Fütterung, Stallhaltung und/oder Medikamentation der(s) Nutztiere(s) abzuleiten und auszugeben.
